Europäisches Patentamt

European Patent Office

Office européen des brevets

(11) Publication number : **0 472 354 A1**

## (12) EUROPEAN PATENT APPLICATION

(21) Application number : **91307492.8**

(22) Date of filing : **14.08.91**

(51) Int. Cl.⁵ : **B25J 15/06**, B65G 47/91, B66C 1/02

(30) Priority : **14.08.90 GB 9017791**

(43) Date of publication of application :
**26.02.92 Bulletin 92/09**

(84) Designated Contracting States :
**DE ES FR IT**

(71) Applicant : **PORTSMOUTH TECHNOLOGY CONSULTANTS LIMITED**
**8 Landport Terrace**
**Portsmouth, Hampshire PO1 2QW (GB)**

(72) Inventor : **Collie, Arthur Alexander**
**11 Bacon Lane**
**Hayling Island, Hampshire PO11 0DN (GB)**

(74) Representative : **Lawrence, Brian Richard**
**59 Shenfield Place**
**Shenfield Brentwood Essex CM15 9AH (GB)**

(54) **Vacuum gripper devices.**

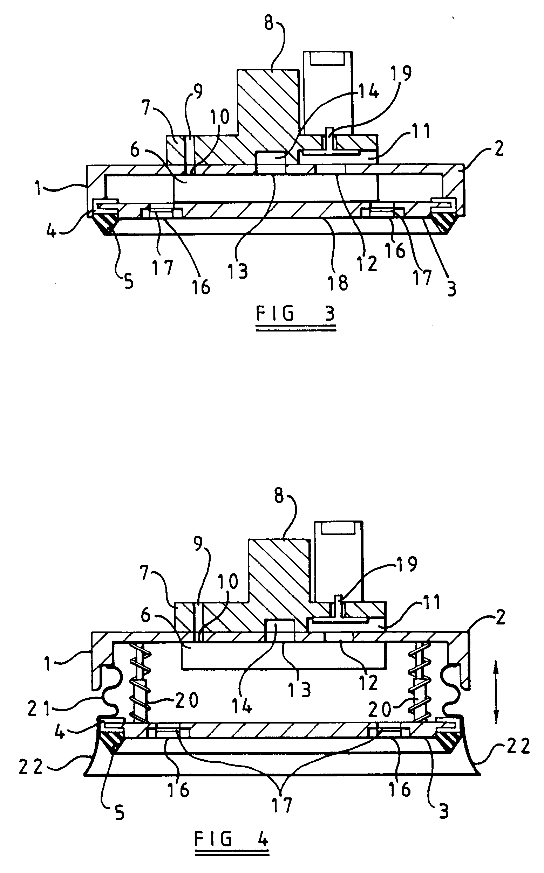

(57)    A vacuum gripper device comprises a two-part hollow disc-shaped housing 1 comprising a cap 2 and a closure plate 3, a multi-ejector vacuum pump 6 disposed in the housing 1, an air distribution manifold 7 attached to the cap 2, the manifold 7 having a compressed air inlet 9 which connects with an inlet port 10 of the pump 6, an exhaust outlet 11 which connects with an exhaust port 12 of the pump 6 and a vacuum connecting pipe 14 connected to the vacuum port 13 of the pump 6 and to the interior of the housing 1, the closure plate 3 being provided with a sealing skirt or rim 5 and a filtered aperture 16 to the interior of the housing 1, the exhaust outlet 11 being provided with a poppet valve 19 which opens and closes the exhaust outlet whereby when a compressed air supply is connected to the compressed air inlet 9, when the poppet valve 19 is closed air is caused to be emitted from the aperture 16 to clear contamination and help position the gripper device, and when the poppet valve is open a vacuum is formed on the underside of the closure plate to cause the gripper device to grip an adjacent surface (Fig.3).

FIG 3

This invention relates to vacuum gripper devices and especially to such devices for use with robotic devices. The invention has particular application to vacuum gripper feet for use in robotic devices of the kind which form the basis of U.K. Patent Application Nos. 8924500.5 and 9006255.5.

The vacuum gripper feet which form the basis of the present invention lend themselves to use in dirty or contaminated environments.

According to the present invention there is provided a vacuum gripper device comprising a body, an outwardly depending sealing skirt or rim extending from an underside of said body, a multi-ejector vacuum pump carried by said body, a compressed air inlet connected to an inlet port of said pump, an exhaust outlet connected to an exhaust port of said pump, an aperture in the underside of said body which connects with a vacuum port of said pump, and valve means for opening and closing said exhaust outlet whereby, in use of said device, a compressed air supply is permanently connected to said compressed air inlet, said valve means being normally closed to close said exhaust outlet so that compressed air is caused to be emitted from said aperture in the underside of said body via the vacuum port of said pump, said valve means being opened when said gripper device is to be attached to an adjacent surface, whereby a vacuum is formed by said pump in said vacuum port and on the underside of said body, which causes said body to be attached to said surface.

In carrying out the invention it may be arranged that said body comprises a two-part, hollow, disc-shaped housing in which said vacuum pump is disposed, said housing conveniently comprising an inverted shallow cup-shaped member in which said pump is disposed, and a disc-shaped member which closes said cup-shaped member and which forms the underside of said housing.

It may be further arranged that said cup-shaped member is provided with an air distribution manifold which includes said compressed air inlet and said exhaust outlet, and includes a vacuum connecting pipe which couples the vacuum port of said pump with the interior of said housing, said aperture being provided in said disc-shaped member for connecting the interior of said housing to the underside of said housing.

Advantageously said valve means comprises a pneumatically operated valve, and an air filter may be provided disposed in the aperture in the underside of said housing.

Conveniently said sealing skirt or rim is clamped between the two parts of said housing, or alternatively said sealing skirt may be attached to said disc-shaped member, in which case, said disc-shaped member may be adjustably mounted on said cup-shaped member, and said disc-shaped member may be coupled to said cup-shaped member by a flexible bellows.

One or more additional sealing skirts may also be provided attached to said housing.

Some exemplary embodiments of the invention will now be described reference being made to the accompanying drawings, in which:

Figure 1, is a plan view of a vacuum gripper foot in accordance with the present invention;

Figure 2, is a cross-sectional side view of the vacuum gripper foot of Figure 1 on the lines 2-2 thereof;

Figure 3, is a cross-sectional side view of the vacuum gripper foot of Figure 1 on the lines 3-3 thereof; and

Figure 4, is a cross-sectional side view corresponding to that of Figure 3, of a modified form of the vacuum gripper foot of Figures 1 to 3.

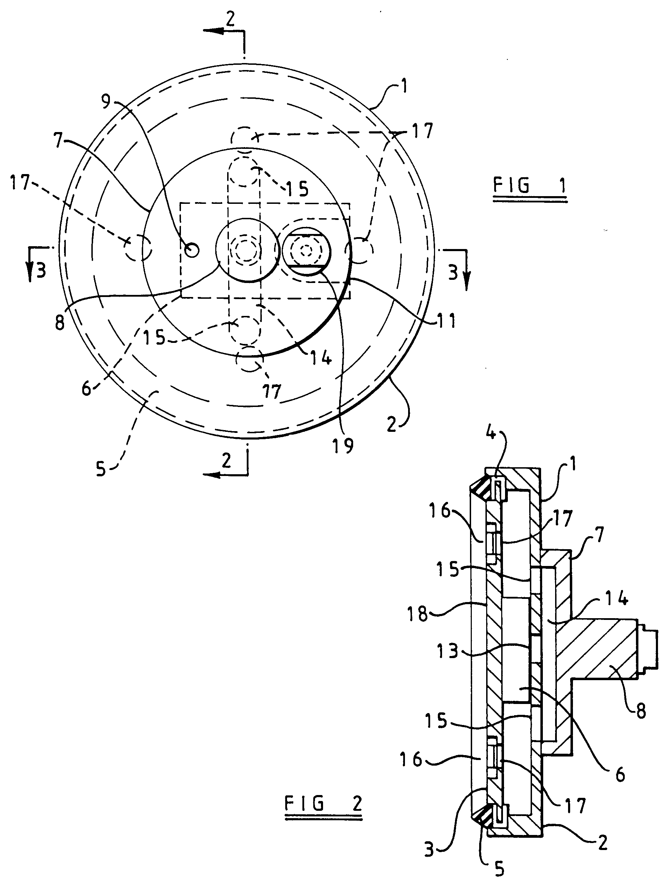

The vacuum gripper foot depicted in Figures 1 to 3 of the drawings comprises a two part hollow disc-shaped housing 1 which consists of a cap 2 and a closure plate 3. The closure plate 3 is provided with a circumferential seal 4 which is received in a recess of the rim of the cap 2 and is secured and sealed thereto. The closure plate 3 is also provided with an outwardly projecting sealing rim 5, typically of a resilient rubber or synthetic rubber material, by means of which the vacuum gripper foot makes contact with the surface (not shown) to which it is to be secured.

Within the two-part housing 1, and sandwiched between the cap 2 and closure plate 3 thereof, is disposed a compressed air operated vacuum ejector pump 6 of known form. The vacuum ejector pump 6 may take the form of a multi-ejector vacuum pump as supplied by PIAB of Brentford, Middlesex, England and as described in their GB Patent No. 1484880 and European Patent Application No. 89850188.7.

Attached to the top of the cap 2 is an air distribution manifold 7 having a central mounting boss 8. The manifold 7 is provided with a compressed air inlet 9 which connects with an input port 10 of the vacuum pump 6 and an exhaust outlet 11 which connects with an exhaust port 12 of the vacuum pump 6. When compressed air is applied to the inlet 9 and thence to the input port 10 of the vacuum pump 6, it is fed through the pump 6 and out via the exhaust port 12 thereof to the exhaust outlet 11, and in doing so causes a vacuum to be developed in intermediate vacuum port 13 of the vacuum pump .6 in well known manner. The vacuum port 13 of the vacuum pump 6 is connected to a transverse connecting pipe 14 in the manifold 7 which is coupled to two diametrically opposite holes 15 (Figure 2) in the top of the cap 2, so that the vacuum induced in the vacuum port 13 of the vacuum pump 6 causes a vacuum to be induced in the housing 1, between the cap 2 and the closure plate 3. The closure plate 3 is also provided with four holes 16 in it each of which is provided with an air filter 17 and by means of which the vacuum induced in the housing 1 is imparted to the underside 18 of the closure plate 3. If, then, the vacuum gripper foot is in contact with or closely adjacent a surface, such as a wall or floor, it will be caused to be sucked towards the surface so that the sealing rim 5 thereof is in contact with the surface and the foot is held in position on the surface.

In order to release the vacuum gripper foot from the surface a pneumatically operated poppet valve 19 is provided mounted in the exhaust outlet 11 of the manifold 7, it being arranged that, when operated, the poppet valve 19 closes the exhaust port 12 of the vacuum pump 6, thereby preventing the flow of compressed air through the pump 6, and terminating the vacuum which is induced in the vacuum port 13 of the vacuum pump 6. Moreover, when the exhaust port 12 of the vacuum pump 6 is closed by the poppet valve 19, compressed air is caused to be emitted from the vacuum port 13 of the vacuum pump 6, the compressed air flow being transmitted via the connecting pipe 14 in the manifold 7 into the housing 1 and out through the holes 16 in the closure plate 3, the outward flow of air through the holes 16 causing any contaminants which may have collected in the filters 17 located in the holes 16 to be blown clear.

The outflow of air through the holes 16 also aids in the correct positioning of the gripper foot on a surface. Typically the gripper foot may be mounted on a universal joint and may approach the surface in a canted manner. The outflow of air through the holes 16 in the closure plate 17 effectively provides a cushion of air which helps to support the foot clear of the surface and allows it to slide relatively easily relative to it so that it can correctly position itself. The outflow of air also causes any loose contaminants e.g. dust on the surface, to be blown clear before the foot is positioned on the surface. When the foot is correctly positioned the pneumatically operated poppet valve 19 may be operated to open the exhaust port 12 allowing air flow through the pump 6 to cause a vacuum to be generated in the vacuum port 13 of the pump 6, which is transmitted to the inside of the housing 1 and to the underside 18 of closure plate 3, thereby to cause the foot to adhere to the surface.

One minor disadvantage of the vacuum gripper foot described with reference to Figures 1 to 3 of the drawings is that the foot needs to be in relatively close proximity to a surface in order that the induced suction can operate to cause the foot to adhere to the surface. This is not always the case when, for example, the gripper foot is mounted on the body of a climbing robot which is endeavouring to climb up an overhanging surface.

In Figure 4 of the drawings there is depicted a modification of the vacuum gripper foot of Figures 1 to 3 which at least partially alleviates this problem. The vacuum gripper foot shown in Figure 4, which corresponds to that depicted in Figure 3, comprises a pair of spring guides 20 by means of which the closure plate 3 is mounted on the cap 2 of the housing 1, and a circumferential flexible bellows 21 connected between the rim of the cap 2 and the closure plate 3. In its unoperated condition, the closure plate 3 would assume its fully extended position as shown in Figure 4, and when compressed air is applied to it, the vacuum which is induced in the housing 1 would cause the closure plate 3 to be drawn towards the cap 2, against the action of the spring guides 20, thereby affording the gripper foot of Figure 4 a greater "reach" than is possible with the gripper foot of Figures 1 to 3.

The vacuum gripper foot of Figure 4 is also provided with an outwardly disposed flexible skirt 22, which may comprise two or more thin layers, disposed around the periphery of the closure plate 3, and which enables the gripper foot to attach itself to uneven surfaces, such as pointed brickwork, the skirt 22 being caused to be dragged into any gaps in the surface to enable the gripper foot to obtain an initial grip on the surface.

It will be appreciated that the vacuum gripper feet which have been described are exemplary examples only and may be modified in accordance with particular requirements. For example, although in the embodiments described the closure plate 3 is provided with four holes 16, the number of holes is not critical and in some embodiments fewer holes, e.g. two, may be used. Also, although in the gripper foot of Figure 4 the skirt 22 is provided on the closure plate 3, it could equally well be provided on the rim of the cap 2, and could equally well be clamped between the rim of the cap 2 and the closure plate 3 of the gripper foot of Figures 1 to 3.

## Claims

1. A vacuum gripper device comprising a body, an outwardly depending sealing skirt or rim extending from an underside of said body, a multi-ejector vacuum pump carried by said body, a compressed air inlet connected to an inlet port of said pump, an exhaust outlet connected to an exhaust port of said pump, an aperture in the underside of said body which connects with a vacuum port of said pump, and valve means for opening and closing said exhaust outlet whereby, in use of said device, a compressed air supply is permanently connected to said compressed air inlet, said valve means being normally closed to close said exhaust outlet so that compressed air is caused to be emitted from said aperture in the underside of said body via the vacuum port of said pump, said valve means being opened when said gripper device is to be attached to an adjacent surface, whereby a vacuum is formed by said pump in said vacuum port and on the underside of said body, which causes said body to be attached to said surface.

2. A device as claimed in claim 1, in which said body comprises a two-part, hollow, disc-shaped housing in which said vacuum pump is disposed.

3. A device as claimed in claim 2, in which said housing comprises an inverted shallow cup-shaped member in which said pump is disposed, and a disc-shaped member which closes said cup-shaped member and which forms the underside of said housing.

4. A device as claimed in claim 3, in which said cup-shaped member is provided with an air distribution manifold which includes said compressed air inlet and said exhaust outlet, and which includes a vacuum connecting pipe which couples the vacuum port of said pump with the interior of said housing, said aperture being provided in said disc-shaped member for connecting the interior of said housing to the underside of said housing.

5. A device as claimed in any preceding claim, in which said valve means comprises a pneumatically operated valve.

6. A device as claimed in any preceding claim, comprising an air filter disposed in the aperture in the underside of said housing.

7. A device as claimed in any of claims 2 to 6, in which said sealing skirt or rim is clamped between the two parts of said housing.

8. A device as claimed in any of claims 3 to 6, in which said sealing skirt is attached to said disc-shaped member.

9. A device as claimed in claim 8, in which said disc-shaped member is adjustably mounted on said cup-shaped member.

10. A device as claimed in claim 9, in which said disc-shaped member is coupled to said cup-shaped member by a flexible bellows.

11. A device as claimed in any preceding claim, comprising one or more additional sealing skirts attached to said housing.

FIG 1

FIG 2

FIG 3

FIG 4

EP 0 472 354 A1

**European Patent Office**

# EUROPEAN SEARCH REPORT

Application Number

EP 91 30 7492

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 453 755 (BLATT)<br>* column 4, line 22 - line 59 *<br>--- | 1,5 | B25J15/06<br>B65G47/91<br>B66C1/02 |
| A | DE-A-1 506 492 (THE BUDD COMPANY)<br>* page 6, line 4 - page 7, line 17 *<br>--- | 1 | |
| A | US-A-2 920 916 (PAGDIN)<br>* column 3, line 11 - line 27 *<br>--- | 1,2 | |
| A | US-A-4 009 785 (TRAYES)<br>* column 3, line 64 - column 4, line 13 *<br>--- | 1,10 | |
| A | EP-A-0 260 128 (YAKULT HONSA)<br>* column 7, line 22 - column 8, line 3 *<br>--- | 1,8,9 | |
| A | GB-A-972 612 (MURRAY CURVEX PRITING)<br>* page 2, line 22 - line 32 *<br>--- | 7 | |
| A | EP-A-0 129 307 (MYOTOKU)<br>* page 3, line 18 - line 27 *<br>--- | 6 | |
| A | EP-A-0 302 221 (SCAGLIA)<br>* column 2, line 45 - column 3, line 1 *<br>--- | 11 | **TECHNICAL FIELDS SEARCHED (Int. Cl.5)**<br><br>B25J<br>B65G<br>B66C |
| A | DE-A-2 203 076 (HEBEL GASBETONWERK)<br><br>----- | | |

The present search report has been drawn up for all claims

| Place of search | Date of completion of the search | Examiner |
|---|---|---|
| THE HAGUE | 13 NOVEMBER 1991 | LAMMINEUR P.C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)